# EUROPEAN PATENT APPLICATION

(11) **EP 1 115 057 A2**
(43) Date of publication of application: **11.07.2001**
(21) Application number: 00309171.7
(22) Date of filing: 18.10.2000
(51) Int. Cl.: G06F 9/44

(54) **Methods and apparatus for providing a portable user interface**

(30) Priority: 27.12.1999 US 472628
(71) Applicant: AT&T Corp., New York, NY 10013-2412 (US)
(72) Inventor: Begeja, Lee, Gillette, Morris County, NJ 07933 (US); Demarco, Ralph Richard JR, New Providence, Union County, NJ 07974 (US); Jacobson, Guy J., Bridgewater, Somerset County, NJ 08807 (US); Kirnos, Ilya M., Swampscott, Essex, MA 01907 (US); Nguyen, Du T., New York, NY 10025 (US)
(74) Representative: Asquith, Julian Peter

(57) **Abstract**

A user interface provider that provides portable user interfaces, in a distributive manner, on a variety of different terminals connected with a network. The portable user interfaces can be stored in a central location of a network and distributed to any terminal connected with the network as a subscriber requests. Additionally, the portable user interfaces can be stored in a distributed fashion across the network and transferred to any terminal connected with the network as a subscriber requests.

## Description

### BACKGROUND OF THE INVENTION

### 1. Field of Invention

The invention relates to a method and apparatus for providing a portable user interface for use in a communications network.

### 2. Description of Related Art

Presently, user interfaces are a common part of most computer software applications. The user interface facilitates operation of the application by providing a user with a convenient way to operate and interact with the application. Many of the existing user interfaces can be customized to further accommodate a user's needs. For example, user interfaces, such as those of word processing applications, can be customized by the user to rearrange, re-size, or define new icons or buttons corresponding to various tools the user commonly uses. Furthermore, the applications can store the user's customized interface for re-use whenever the user desires. However, if the user changes to a different application or even the same application on a different computer, the interface will also change. Accordingly, the user may need to learn an entirely new user interface or again customize a default user interface in order to operate an application.

### SUMMARY OF THE INVENTION

The present invention provides methods and apparatus for providing portable user interfaces, in a distributive manner, on a variety of different terminals connected with a network. The portable user interfaces can be stored in a central location of a network and distributed to any terminal connected with the network as a subscriber requests. Additionally, the portable user interfaces can be stored in a distributed fashion across the network and transferred to any terminal connected with the network as a user requests.

The portable user interfaces can include a customized arrangement of any graphical and/or audio interface which may be used to operate a terminal or software running on the terminal which is connected with the network. For example, a first subscriber may design and store a first portable user interface for browsing the Web in a central location. The first portable user interface may be customized with a set of windows, colors, and sound effects which the first subscriber finds particularly useful and appealing for displaying information while browsing the Web. Additionally, a second subscriber may design and store a second portable user interface for browsing the Web in the central location. The second portable user interface being a different set of windows, colors, and sounds which the second subscriber finds particularly useful for browsing the Web.

Subsequently, the first subscriber can use a terminal connected with the network to browse the Web. The terminal may prompt the subscriber for identification and the first subscriber may identify themselves to the terminal by entering a password or by swiping a Smartcard with subscriber information against a reader. Once the first subscriber is identified, the present invention can transmit the first portable user interface from the central location via the network to the terminal. The first portable user interface will then be displayed to the first subscriber for use in browsing the Web.

Later, the same terminal may be used by the second subscriber in a similar manner to browse the web. Once the second subscriber identifies themselves to the terminal, the present invention can transmit the second portable user interface to the terminal. The same terminal will then display the different second portable user interface to the second subscriber for use in browsing the web.

The present invention further provides a method of storing a plurality of specialized portable user interfaces that can be selectively transferred to a terminal based on the type of transaction a subscriber desires to accomplish. For example, if the subscriber is using a terminal connected with a network, such as an automatic teller machine (ATM), then based on this bank-type of transaction the subscriber's ATM-interface would be displayed for the subscriber to use while making the transaction. The subscriber would then operate and interact with the ATM through the subscriber's personalized interface. A subsequent subscriber using the same ATM terminal can later interact with the ATM through a different personalized ATM interface or a default interface of the ATM terminal.

Furthermore, a portable user interface can be selected based on a functional hierarchy of transactions. For example, if the subscriber were purchasing an item by using a terminal connected with the network (i.e., electronic commerce), the terminal can be provided with a generic purchasing user interface when the subscriber initially conducts the transaction. The generic purchasing interface can be the default interface which the subscriber has customized and stored in the system. Such a generic purchasing interface can include tools for establishing a price of the product to be purchased, tools for paying for the product, in other words, the generic purchasing interface can include anything which might be necessary to purchase any item over the network.

However, if the subscriber were purchasing a specific item, such as an automobile over the network, then the user interface could be a specialized automobile purchasing user interface as opposed to the generic purchasing user interface. The automobile purchasing interface can include automobile specific features, such as windows, buttons, dialogue boxes, or the like which are related to purchasing an automobile. For example, automobile specific features may include some or all of the features of the generic purchasing interface in addition to a window displaying current car loan interest rates, a dialogue box for communicating with a car dealer through text or voice, a button to solicit an offer, and the like.

### BRIEF DESCRIPTION OF THE DRAWINGS

The invention is described in detail with regards to the following figures, in which like elements are referred to with like numerals, and in which:
Fig. 1 is an exemplary block diagram of an interface storing system according to the present invention;
Fig. 2 is an exemplary block diagram of the interface storage device of Fig. 1;
Figs. 3a and 3b are exemplary user interfaces;
Fig. 4 is an exemplary data structure for storing interface information; and
Fig. 5 is a flowchart outlining an exemplary process of an interface storage device according to the present invention.

### DETAILED DESCRIPTION OF PREFERRED EMBODIMENTS

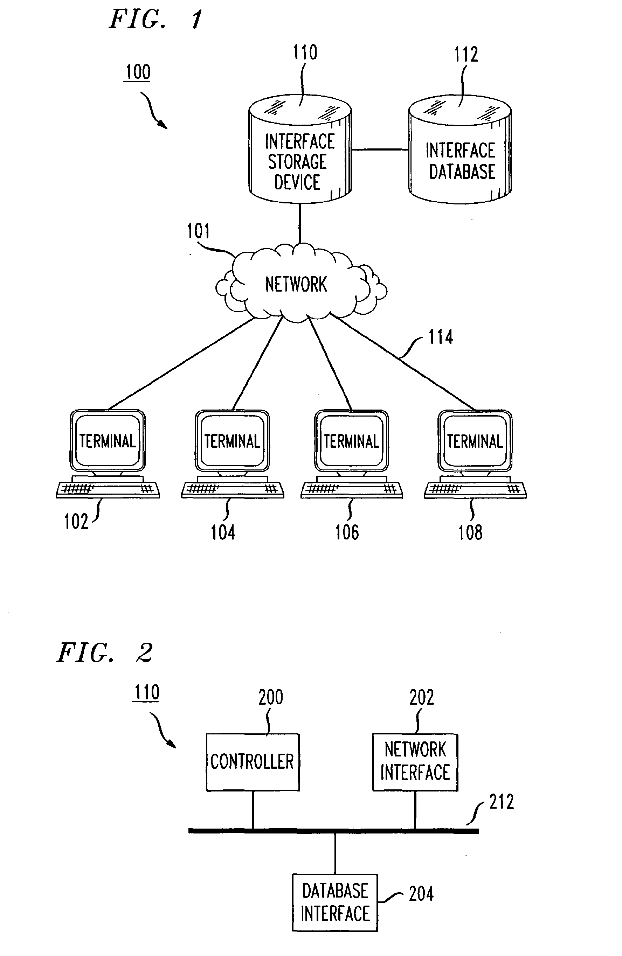

Fig. 1 is an exemplary block diagram of a communication system 100 according to the present invention. As shown in Fig. 1, the communication system 100 includes terminals 102, 104, 106, 108, and an interface assigning device 110 coupled to a network 101 through communication links 114. Additionally, an interface database 112 is coupled to the interface storage device 110.

The terminals 102-108 can be devices of any type that allow for the transmission and/or reception of communication signals. For example, the terminals 102-108 may be land-line telephones, cellular telephones, computers, personal digital assistants, video telephones, video conference apparatuses, smart or computer assisted televisions, and the like. For the purpose of the following description of the present invention, it will be assumed that terminals 102-108 are computers.

Additionally, the terminals 102-108 can be capable of conducting numerous types of transactions. For example, the terminal 102 can serve as a video phone for a first transaction, and later serve as a terminal for purchasing items over the network 101 (i.e., e-commerce) during a second transaction. When the function of the terminal 102 changes, the user interface which the terminal 102 displays to a subscriber also changes. In this manner, each of the terminals 102-108 are capable of conducting various types of transactions depending on the needs of a current subscriber.

Terminals 102-108 and interface assigning device 110 are in communication with network 101 through communication links 114. These communication links 114 can be any type of connection that allows for the transmission of information. Some examples include conventional telephone lines, fiber optic lines, direct serial/parallel connections, cellular telephone connections, satellite communication links, local area networks (LANs), intranets and the like.

Communication signals are received by the network 101 and are routed in network 101 by way of, for example, routers and switches (not shown) to a destination terminal for receiving the communication signals. The routing may be performed by switches, such as Lucent Technologies Inc. 5ESS and 4ESS switches or Cisco routers and switches that switch IP Data, for example, which are generally known in the art.

Network 101 may be a single network or a plurality of networks of the same or different types. For example, the network 101 may include a local telephone network (such as Bell Atlantic's network) in connection with a long distance network (such as the AT&T long distance telephone network). Further, the network 101 may be a data network or a telecommunications network in connection with a data network. Any combination of telecommunications and data networks may be used without departing from the spirit and scope of the present invention. For the purposes of discussion, it will be assumed that network 101 is a single data network.

The interface assigning device 110 may be an independent unit coupled to the network 101 (as shown), or it may just be distributed throughout the communications network 101. For example, the interface assigning device 110 may be part of the various central offices or servers employed by the network 101 which are distributed throughout the network. Any configuration that permits assigning of interfaces to the plurality of terminals 102-108 connected with network 101 may be used without departing from the spirit and scope of the present invention.

The interface assigning device 110 can provide a terminal 102-108 with a user interface when a subscriber uses any of the terminals 102-108 connected with the network 101. The user interfaces are considered portable since the same interface can be displayed on any terminal 102-108 which the subscriber is currently using. The user interface may be customized to reflect a subscriber's personal preferences. The customized user interfaces can be user interfaces that were created by the subscriber, or may be user interfaces which the user downloaded from a commercial interface designing service. Furthermore, the customized user interfaces can be a portion of an existing user interfaces which the subscriber found particularly helpful, and therefore the subscriber extracted the useful portion and combined it with the subscriber's user interface.

Alternatively, the user interfaces can be of a generic or default type. The generic user interface can be an interface that the interface assigning device 110 provides to a subscriber when a subscriber has not selected or designed a customized user interface.

The interface database 112 stores the various user interfaces for each of the subscribers. Each subscriber can have numerous user interfaces stored in the interface database 112. Each of the subscriber's user interface can also correspond to a specific type of transaction on a terminal. For example, assume that the terminal 102 is a public video phone and that a subscriber's wish to place a video call to the terminal 108 which is a private video phone for this example. When the subscriber activates the video phone terminal 102, the terminal 102 can prompt the subscriber to determine whether the subscriber wishes to use a personal user interface or the terminals' 102 default interface. In response, the subscriber can enter their selection by any method, such as a keypad, touch screen, voice command, or the like. Alternatively, the subscribers' user interface selection can be made by sweeping a smart card through the terminal 102 which contains a record of a subscriber's information, such as user interface preferences.

If the subscriber chooses the terminal's 102 default interface, then the subscriber is provided with the default interface and the video call is placed accordingly. If the subscriber chooses to use a personal video phone interface, then the terminal 102 notifies the interface assigning device 110 via the network 101 of the request. The request can contain information concerning the subscriber's identification along with the type of transaction the subscriber currently wishes to conduct on terminal 102 (i.e., video telephone call). Based on the request, the interface assigning device 110 can query the interface database 112 to locate the subscriber's video phone interface.

In response to a query from the interface assigning device 110, the interface database 112 finds and returns the subscriber's requested interface to the interface assigning device 110. The interface assigning device 110 then returns the requested interface to the terminal 102 via network 101. The terminal 102 then displays the video phone interface to the subscriber so that the subscriber may then use the interface to operate the video phone.

In this example, the video phone interface can include information that the subscriber finds useful when replacing a call on a video phone. Such information can include a directory of telephone numbers of the subscriber's friends, family, business associates and/or a subscriber's preferred telephone directory, such as the AT&T telephone directory or the Yahoo phone directory, a clock function which displays the length of the call and possibly the corresponding cost of the call, the subscriber's calling card numbers in order to pay for the call or the like. Furthermore, user preferences, such as resolution and update rate of the video pictures, can be automatically established by the personalized user interface. Additionally, the subscriber's video phone interface can include access to the subscriber's messages (video and/or voice) which have been left by missed callers.

By providing a common interface or a set of common interfaces, the subscriber is always presented with a familiar interface regardless of the terminal 102-108 which the subscriber chooses to use. Accordingly, the subscriber is not confronted with a new and sometimes confusing interface each time they use a different terminal 102-108. The familiar interface reduces the time that it takes to familiarize oneself with a new terminal. Therefore, subscribers can switch between the terminals 102-108 without the need to know or learn a new interface.

Accordingly, many different subscribers may operate the same terminal using numerous different user interfaces. For example, a first subscriber can use a terminal to conduct a video telephone conference using a first user interface which was previously customized by the first subscriber. Later, the same terminal may be used by a second subscriber to conduct a video telephone conference. However, the second subscriber can use a different second user interface which was previously customized by the second subscriber.

Fig. 2 is an exemplary block diagram of an interface assigning device 110. The interface assigning device 110 includes a controller 200, a network interface 202, and a database interface 204. The above components are coupled together through a control/signal bus 212.

The controller 200 monitors the use of the terminals 102-108 over the network 101 through the network interface 202. When a subscriber wishes to use a terminal 102-108, the terminal 102-108 can prompt the subscriber to inquire whether the subscriber would like to use a user interface other than the default interface offered by the terminal 102-108. If the subscriber decides to use one of their personal user interfaces, the terminal 102-108 can further prompt the subscriber for subscriber information, such as a subscriber's ID. The subscriber information is sent to the controller 202 via network 101.

The subscriber information permits the controller 200 to identify the subscriber and further select an interface from the subscriber's corresponding set of personal user interfaces. The subscriber information can be entered into the terminal 102-108 by a keypad, a voice command, a biometrics measurement (i.e., fingerprint), or the like. Furthermore, the subscriber information can be entered via swiping a smart-card through or near the terminal 102-108. The smart-card can contain subscriber information which identifies the subscriber, and which in turn would be used by the controller 200 to select a personal user interface.

At any time during or after the subscriber identifying process, the terminal 102-108 or subscriber can identify the type of transaction that is taking place. For example, if the terminal 102 is an ATM, and the subscriber has decided they would like to use a personalized banking interface, while the subscriber enters the subscriber information, the terminal 102 or subscriber can simultaneously include a message to the controller 200 which identifies the transaction as being a bank transaction. Accordingly, once the subscriber has been properly identified, the controller can automatically select a subscriber's personalized bank-interface to send to the terminal 102 for use by the subscriber.

The interfaces of all the subscribers can be stored in a database 112 which is connected with the interface assigning device 110 via the database interface 204. When a terminal 102-108 provides the controller 200 with subscriber information, the controller 200 can access the various stored personalized user interfaces for a particular subscriber. The stored personalized user interfaces can be the data necessary to display and operate a user interface on a terminal 102-108. The personal interface data can include information for instructing the terminal 102-108 how to set up the interface. For example, if the interface is a graphical user interface (GUI) the personal interface data would include information pertaining to the placement and types of tools which should be made available to the subscriber, such as buttons, dialog boxes, windows, and the like. Furthermore, the data can include information on the esthetics of the GUI, such as color schemes, sound effects or the like. Additionally, the personal interface data can include additional data that the subscriber may want to access while using a particular terminal 102-108 or type of terminal 102-108. As discussed above in the video telephone example, the additional data may be a personal telephone directory of the terminal IDs of friends, family and/or business associates.

The personalized user interfaces are designed to operate with the various terminals and various types of transactions on the terminals by utilizing common data fields that are necessary for common transactions. Accordingly, for each type of transaction on a terminal 102-108 a standard set of data fields could be established. For example, for purchasing an item over the network 101 (i.e., e-commerce) the standard data fields which are necessary to conduct the transaction may be the vendor ID, product ID, quantity, price, subscriber credit card number and whether the subscriber accepts the offer. By using the above-enumerated standard data fields, any user interface configuration can be used for e-commerce as long as the user interface uses all or a subset of the standards data fields.

The standard set of data fields could be similar to the data fields defined in the electronic commerce modeling language (ECML). The ECML defines a fixed set of data elements for electronic commerce. ECML benefits customers who are frequently required to enter substantial amounts of information at an Internet merchant site in order to complete a purchase or other transaction, especially the first time they visit such a site since the same data fields are used for similar transactions.

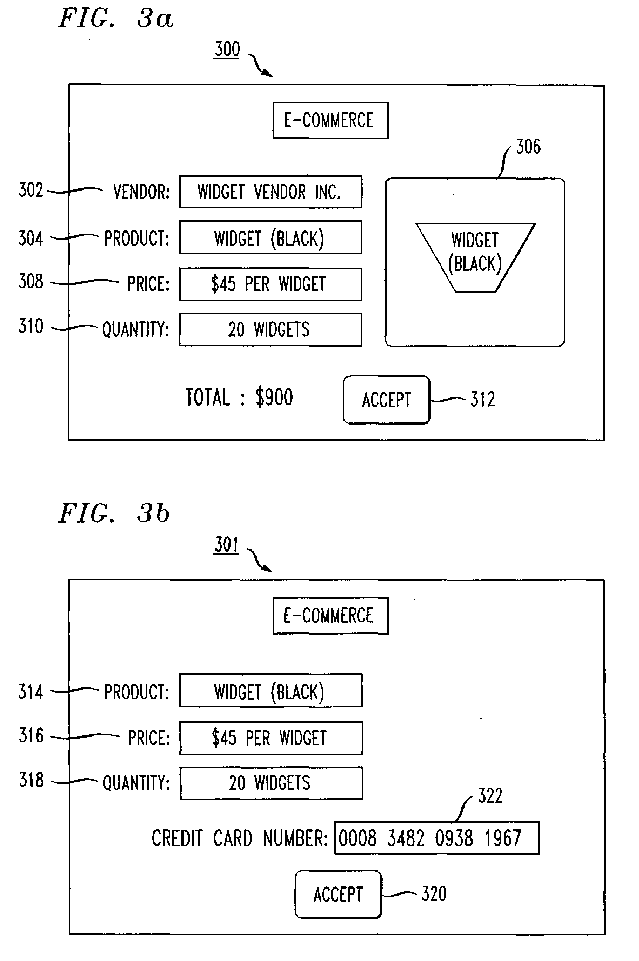

Referring to Fig. 3a, and by way of example, if a subscriber wanted to use terminal 104 to purchase widgets over the network 101 from a widget vendor on terminal 106, the subscriber can activate the terminal 104 and request a personalized user interface 300 from the interface assigning device 110. As described above, the terminal 104 or subscriber may also identify the type of transaction (e-commerce), and therefore the interface assigning device 110 would retrieve an e-commerce personalized user interface. The e-commerce interface would include data fields for displaying the vendor ID 302, the product ID 304 (possibly a still or video image of the product 306), the price of the product 308, a dialog box for the subscriber to select a quantity 310, and a possible button 312 for the subscriber to "click on" to accept an offer to buy the product at the displayed terms. Additionally, the subscriber's credit card number field may be communicated to the interface, however, the credit card number need not be displayed to the subscriber, but instead only sent to the vendor if the subscriber decides to the accept the offer.

For example, Fig. 3b shows a personalized user interface 301 of a different subscriber from that of the personal user interface 300 shown in Fig. 3a. Assuming the subscriber only requires a subset of the standard e-commerce data fields, the personalized user interface 301, in Fig. 3b, only uses the product field 314, the price field 316, the quantity field 318, and a button 320 for the subscriber to "click on" to accept an offer to buy the product. Furthermore, the personalized user interface 301 includes a credit card number field 322 which this particular subscriber wishes to have displayed on the user interface.

As can be seen from Figs. 3a and 3b, either personalized user interface 300, 301 can be interchanged since they share a common set or subset of standardized data fields. By using a standardized set of data fields on all the terminals 102-108 for any particular type of transaction, personalized interfaces can be easily be interchanged since the personalized user interfaces all use the same common data fields.

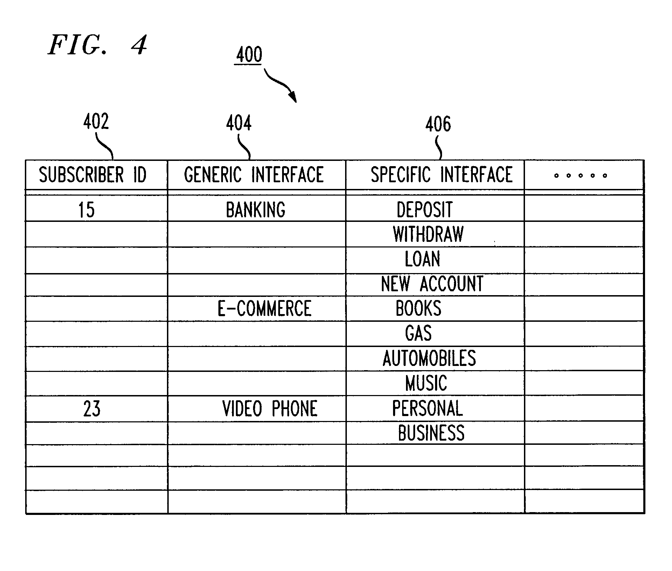

Fig. 4 discloses an exemplary data structure 400 for storing subscriber personalized interface information in the interface database 112. Field 402 contains a subscriber ID. The subscriber ID can be any unique identifier of a particular subscriber. For example, the subscriber ID can be an identification number which uniquely identifies a subscriber. Furthermore, the subscriber ID in field 402 can be a voice record of the subscriber, whereby a voice sample of a subscriber can be identified by various speech recognition techniques in order to identify a subscriber.

Field 404 contains a generic level group of personalized user interfaces while field 406 contains more specific personalized user interfaces, both of which correspond to the various subscriber IDs in field 402. As discussed above, field 404 and field 406 create the above-described personal user interface hierarchy. The user interfaces in field 404 are considered generic relative to the specific user interfaces of field 406 because they are used to interact with a terminal 102-108 for a general purpose, wherein the user interfaces a field 406 are generally designed to achieve a specific purpose.

For example, the field 404 contains an e-commerce personalized user interface, while field 406 contains the e-commerce sub-directories of interfaces related to gas, books, music and automobiles. When the subscriber having subscriber ID 15 wishes to purchase an item other than gas, books, music or automobiles over the network 101, the interface assigning device 110 provides the subscriber's terminal 102-108 with the generic e-commerce personal user interface. However, when the subscriber wishes to purchase a specific item, such as gas, books, music or automobiles over the network 101, the interface assigning device 110 would provide the subscriber with the specific personal user interface. Furthermore, it is to be understood that the directory hierarchy shown in fields 404 and 406 is exemplary only, and that numerous additional levels of personal user interfaces can be included without departing from the spirit and scope of the present invention.

Furthermore, the personalized user interface can be designed so that components of a generic user interface can remain displayed to the subscriber even when the subscriber has decided to perform a new function. For example, assume that a subscriber has a user interface for buying books online. When a subscriber wants to purchase a different item online, such as coins, for the first time, they should only have to adapt their user interface to the new coin buying portions. There should be a generic part that relates to buying things that stays constant across all buying interfaces. This can be represented by the user interface class hierarchy shown in data structure 400. For example, the generic interface for e-commerce in field 404 of data structure 400 can include fields such as the price (in red), quantity, and encrypted credit card numbers. However, these specific interfaces can include fields that are unique to purchasing that particular product. For example, if the subscriber were to buy gasoline over the network, the user interface could include the fields of quantity in gallons and type of gasoline (unleaded/regular) if a subscriber were purchasing books over the network, the user interface may include the quantity and or the type of book (i.e., The Title). If a subscriber were purchasing music over the network, the user interface may include the data field, such as quantity in the units or minutes, and type (i.e., physical or electronic media).

Another example of operation can include a service, such as NetFridge ^{SM}, for a group, such as a family, which provides access to an Internet site, such as a web page, which the group may then use as a central location for posting pictures, notes, video clips, audio clips, E-mail or the like. The service can be used by subscribers using a personalized interface designed to display the postings of the service in a customized manner. Furthermore, the service can also be used by the group to gather or download desirable portions of the service's interface and incorporate the interface portions into a subscriber's set of personalized user interfaces.

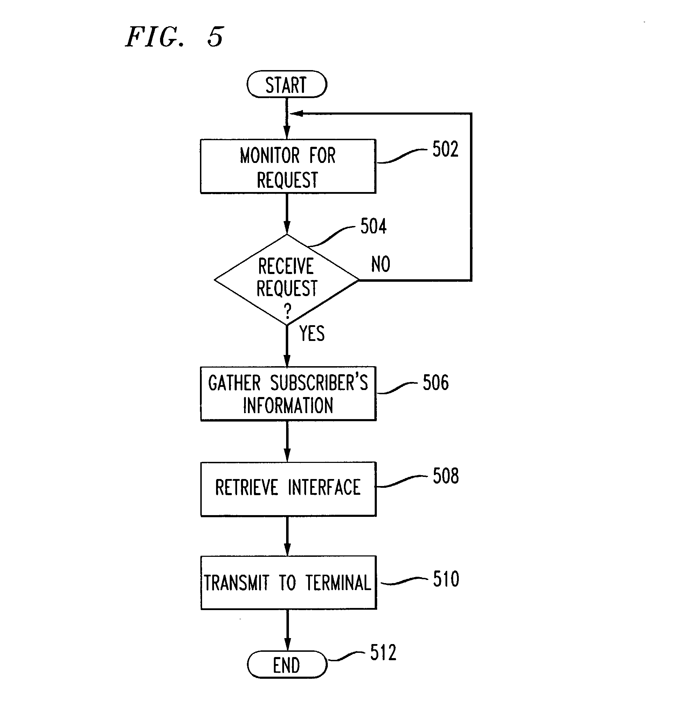

Fig. 5 shows a flowchart of an exemplary process of the present invention. In step 502 the process monitors a network for a request from a terminal for a personalized user interface. The request can be the result of a user activating the terminal to begin a transaction, such as a banking transaction.

The process then proceeds to step 504 where the process checks to see if a request has been received. If a request has been received the process proceeds to step 506; otherwise the process returns to step 502 and continues to monitor the network.

In step 506 the process gathers an identifier of a subscriber requesting a personalized user interface and additionally gathers the type of transaction which the subscriber is participating. The process then proceeds to step 508.

In step 508 the process retrieves a personalized user interface from a database which corresponds to the subscriber's identification and the type of transaction in which the subscriber is participating.

In step 510 the process sends the retrieved personalized user interface to a terminal from which the subscriber has requested the interface. Once the personalized user interface has been transmitted to the terminal, the process proceeds to step 512 where the process is terminated.

As shown in Fig. 2, the method of this invention is preferably implemented on a programmed processor. However, the interface assigning device 110 can also be implemented as part of a switch or a stand alone on a general purpose or a special purpose computer, a programmed microprocessor or microcontroller and peripheral integrated circuit elements, an Application Specific Integrated Circuit (ASIC), or other integrated, a hardware electronic or logic circuit such as a discrete element circuit, a programmable logic device such as a PLD, PLA, FPGA, or PAL, or the like. In general, any device on which exists a finite state machine capable of implementing the flowcharts shown in Fig. 5 can be used to implement the interface assigning device 110 functions of this invention.

While this invention has been described in conjunction with the specific embodiments thereof, it is evident that many alternatives, modifications, and variations will be apparent to those skilled in the art. Accordingly, preferred embodiments of the invention as set forth herein are intended to be illustrative, not limiting. There are changes that may be made without departing from the spirit and scope of the invention.

## Claims

1. A method for providing a user interface to a terminal over a network, comprising:
receiving a request for a user interface from a terminal;
retrieving the user interface from at least one previously stored user interface based on the request; and
transmitting the retrieved user interface to the terminal.

2. The method according to claim 1, wherein the user interface is a pre-stored user interface that includes a customized graphical user interface.

3. The method according to claim 2, wherein the customized graphical user interface includes at least one of a button, a dialog box, or a color selection that is selected by a subscriber using the terminal.

4. The method according to claim 1, wherein the request includes at least a subscriber identifier.

5. The method according to claim 4, wherein the subscriber identifier includes at least one of a personal identification number voice sample, finger print or retina scan.

6. The method according to claim 1, wherein the request is based on subscriber information stored on a Smartcard that is read by the terminal.

7. The method according to claim 1, wherein the user interface include a set or a subset of standardized data fields.

8. The method according to claim 7, wherein the standard data fields are based on a type of transaction a subscriber is transacting.

9. The method according to claim 1, wherein the request includes an identifier of a type of user interface that the terminal is requesting.

10. An apparatus that provides a user interface to a terminal over a network, comprising:
a data base for storing user interfaces;
a controller that receives a request for a user interface from a terminal, retrieves the user interface from the plurality of user interfaces stored in the data base based on the request, and
transmits the retrieved user interface to the terminal.

11. The apparatus according to claim 10, wherein the user interface is a pre-stored user interface that includes a customized graphical user interface.

12. The apparatus according to claim 11, wherein the customized graphical user interface includes at lease one of a button, a dialog box, or a color selection that is selected by a subscriber using the terminal.

13. The apparatus according to claim 10, wherein the request includes at least a subscriber identifier.

14. The apparatus according to claim 12, wherein the subscriber identifier includes at least one of a personal identification number, voice sample, fingerprint or retina scan.

15. The apparatus according to claim 10, wherein the request is based on subscriber information stored on a Smartcard that is read by the terminal.

16. The apparatus according to claim 10, wherein the user interface includes a set or a subset of standardized data fields.

17. The apparatus according to claim 16, wherein the standard data fields are based on a type of transaction a transcriber is transacting.

18. The apparatus according to claim 10, wherein the request includes an identifier of a type of user interface that the terminal is requesting.
